(19) **Europäisches Patentamt**
**European Patent Office**
**Office européen des brevets**

(11) **EP 3 837 508 B1**

(12) **EUROPÄISCHE PATENTSCHRIFT**

(45) Veröffentlichungstag und Bekanntmachung des Hinweises auf die Patenterteilung:
**26.07.2023  Patentblatt 2023/30**

(21) Anmeldenummer: **19755613.7**

(22) Anmeldetag: **16.08.2019**

(51) Internationale Patentklassifikation (IPC):
**G01F 25/20** *(2022.01)*       **G01F 22/02** *(2006.01)*
**G01F 17/00** *(2006.01)*       **G01F 23/14** *(2006.01)*

(52) Gemeinsame Patentklassifikation (CPC):
**G01F 22/02; G01F 17/00; G01F 23/14; G01F 25/20**

(86) Internationale Anmeldenummer:
**PCT/EP2019/071985**

(87) Internationale Veröffentlichungsnummer:
**WO 2020/035582 (20.02.2020 Gazette 2020/08)**

(54) **VERFAHREN ZUR VOR-ORT KALIBRIERUNG EINES FÜLLSTANDSMESSGERÄTS UND VOR-ORT KALIBRIERMODUL**

METHOD FOR ON-SITE CALIBRATION OF A FILL LEVEL MEASURING DEVICE, AND ON-SITE CALIBRATION MODULE

PROCÉDÉ POUR L'ÉTALONNAGE IN SITU D'UN APPAREIL DE MESURE DE NIVEAU ET MODULE D'ÉTALONNAGE IN SITU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.08.2018  DE 102018119951**

(43) Veröffentlichungstag der Anmeldung:
**23.06.2021  Patentblatt 2021/25**

(73) Patentinhaber: **Endress+Hauser Group Services AG**
**4153 Reinach (CH)**

(72) Erfinder:
• **ABRAHAM, Jürgen**
**24980 Hörup (DE)**
• **BRÄNDLIN, Stefan**
**79576 Weil am Rhein (DE)**
• **THIEL, Torsten**
**19067 Retgendorf (DE)**

(74) Vertreter: **Hahn, Christian et al**
**Endress+Hauser Group Services (Deutschland)AG +Co. KG**
**Colmarer Straße 6**
**79576 Weil am Rhein (DE)**

(56) Entgegenhaltungen:
WO-A1-95/30131        WO-A1-98/26257
WO-A1-2017/016779     DE-A1-102004 027 336
JP-A- S62 237 323     US-A- 6 038 919
US-A1- 2016 061 646   US-A1- 2016 193 615
US-A1- 2017 038 238   US-B1- 7 347 089

EP 3 837 508 B1

**Beschreibung**

Die Erfindung betrifft ein Verfahren zur Vor-Ort Kalibrierung eines Füllstandsmessgeräts, sowie ein Vor-Ort Kalibriermodul.

Füllstandsmessgeräte kommen als Feldgeräte in industriellen Prozessanlagen der Automatisierungstechnik zum Einsatz. Als Feldgeräte werden im Prinzip alle Messgeräte zur Bestimmung und/oder Überwachung von Prozessgröße bezeichnet, die prozessnah eingesetzt werden und prozessrelevante Informationen liefern oder verarbeiten. Derartige Feldgeräte werden von der Endress+Hauser Gruppe in den unterschiedlichsten Ausgestaltungen hergestellt und vertrieben und in der Automatisierungstechnik zur Bestimmung und/oder Überwachung von Prozessgrößen eines Prozessmediums eingesetzt. Bei dem Prozessmedium handelt es sich beispielsweise um ein fließfähiges Medium, insbesondere ein Fluid im Falle eines flüssigen und/oder gasförmigen Prozessmediums.

Bei dem Füllstandsmessgerät handelt es sich beispielsweise um ein Laufzeit-Füllstandsmessgerät.

Bei Laufzeit-Füllstandsmessgeräten wird zur Ermittlung des Füllstands eines Mediums in einem Behälter ein Sendesignal von einem Sender ausgesendet und durch Reflektion des Sendesignals an der Oberfläche des Mediums ein Echosignal gebildet, das von einem Empfänger empfangen und ausgewertet wird. Die Laufzeit von Sende- und Echosignal ist dabei ein Maß für den Füllstand. Bekannt sind beispielsweise Laufzeit-Füllstandsmessgeräte, die mit Mikrowellen (bsp. Radar) oder mit anderen elektromagnetischen Wellen arbeiten. Weiterhin bekannt sind mit Ultraschallwellen arbeitende Laufzeit-Füllstandsmessgeräte.

Alternativ handelt es sich bei dem Füllstandsmessgerät beispielsweise um ein mit dem hydrostatischen Druck arbeitendes Füllstandsmessgerät, welches mittels zweier an unterschiedlichen Höhen des Behälters angebrachter Druckmessgeräte den Füllstand des Prozessmediums bestimmt. Weitere aus dem Stand der Technik bekannte Füllstandsmessgeräte und im Rahmen der Erfindung relevante Füllstandsmessgeräte umfassen bsp. mit Wägezellen arbeitende Füllstandsmessgeräte oder kapazitiv und/oder konduktiv arbeitende Füllstandsmessgeräte.

Derartige Füllstandsmessgeräte sind in einer Vielzahl von Patentanmeldungen der Anmelderin beschrieben.

Aus dem mit dem Füllstandsmessgerät ermittelten Füllstand des Prozessmediums in dem Behälter wird oftmals das Volumen des in dem Behälter aufgenommenen Prozessmediums bestimmt. Dieses stellt bsp. eine für die Prozesssteuerung und/oder -regelung relevante Steuer- und/oder Regelgröße dar.

Eine Möglichkeit besteht darin, das Volumen des Prozessmediums aus dem Füllstand anhand einer vorgegebenen Behältergeometrie zu bestimmen. Diese Methode ist allerdings in ihrer Genauigkeit dadurch beschränkt, dass z.B. Einbauten im Behälter wie etwa Rührwerke das vom Medium tatsächlich einnehmbare Volumen beeinflussen. Insbesondere in der pharmazeutischen, chemischen und/oder lebensmittelverarbeitenden Industrie ist aufgrund von hohen Sicherheitsanforderungen oftmals eine sehr genau Kenntnis über das tatsächlich im Behälter vorliegende Volumen des Prozessmediums vonnöten. Daher wird hier, in der Regel vor Inbetriebnahme des Prozesses, ein Testmedium mit bekanntem Volumen in den Behälter eingeströmt, ein vom Füllstandsmessgerät angezeigter Messwert bestimmt und mit dem bekannten Volumen korreliert. Anhand der Korrelation unterschiedlicher derartiger Volumen/Füllstand-Wertepaare wird eine Kalibrierkurve Vmed(L) ermittelt und bsp. in einer Regel-/Auswerteeinheit hinterlegt, um im späteren Betrieb den vom Füllstandsmessgerät ermittelten Füllstand anhand der Kalibrierkurve Vmed(L) in ein Volumen umzurechnen. Das Einströmen des Testmediums und das Erstellen einer derartigen Kalibrierkurve wird im Stand der Technik oftmals als sog. "Linearisierung" bezeichnet, wobei der Zusammenhang zwischen Füllstand und Volumen je nach Behältergeometrie und/oder Ausgestaltung von Behälter-Einbauten selbstverständlich auch nicht-linear sein kann. Aufgrund der hygienischen Anforderungen in den vorstehend genannten Industrien wird als Testmedium bei der Linearisierung in der Regel besonders gereinigtes Wasser, bsp. Wasser für Injektionszwecke (englisch: Water for injection, kurz: WFI,) verwendet.

Da ein Füllstandsmessgerät alterungsbedingt einem Driftprozess unterliegt, muss es nach einer vorgegebenen Einsatzdauer kalibriert, verifiziert und/oder justiert werden, bsp. in regelmäßigen vorgegeben Abständen zur Einhaltung von vorgegebenen Sicherheitsanforderungen in den vorstehend genannten Industrien. Unter dem Kalibrieren versteht man dabei üblicherweise das Feststellen einer Abweichung eines von dem Füllstandsmessgerät gemessenen ersten Messwerts von einem alternativ ermittelten und als korrekt angenommenen Referenzwert. Das Verifizieren umfasst zusätzlich das Ermitteln der Abweichung und deren Einschätzung bzw. Bewertung. Unter dem Justieren versteht man das Anpassen des Füllstandsmessgerät der Weise, dass dessen angezeigter Messwert mit dem als korrekt angenommenen Referenzwert übereinstimmt. Zum Kalibrieren, Verifizieren und/oder Justieren muss im Stand der Technik das oftmals fest am Behälter angebrachte Füllstandsmessgerät ausgebaut werden. Alternativ oder zusätzlich wird, wie bei der vorstehend genannten Linearisierung, ein bekanntes Volumen eines Testmedium in einen vollständig geleerten Behälter eingeströmt, der angezeigte Füllstand des Füllstandsmessgeräts abgelesen und mit der anfänglich ermittelten und hinterlegten Kalibrierkurve ein Volumen des Testmediums ermittelt. Je nach Industrie wird als Testmedium oftmals das bereits erwähnte WFI-Wasser verwendet, welches in der Regel sehr teuer ist. Der Vergleich zwischen dem bekannten Volumen des Testmediums und dem mit dem Füllstandsmessgerät ermittelten Volumen wird dann zum Kalibrieren, Verifizieren und/oder Justieren des Füllstandsmessgeräts verwendet. Nachteilig ist, dass beide Methoden zum Kalibrieren, Verifizieren und/oder Justieren mit sehr langen Standzeiten einhergehen. Diese verursachen durch die damit einhergehenden Produktionsausfälle in der Regel hohe Kosten.

US 2016/061646 A1 offenbart ein Verfahren und eine Vorrichtung zur Vor-Ort Kalibrierung eines Füllstandsmessgeräts. Das Füllstandsmessgerät umfasst: ein Rohr mit einem unteren Teil, der mit einem Flüssigkeitsvolumen in Verbindung steht, wobei ein oberer Teil nicht mit der Flüssigkeit gefüllt ist; und eine Vorrichtung zur Messung eines Niveaus der Flüssigkeitsoberfläche entlang des Rohrs. Das Verfahren umfasst die folgenden Schritte: Setzen des oberen Teils des Innenraums unter einen vorbestimmten Druck mittels Druckgas; Berechnen eines theoretischen Niveaus der Flüssigkeitsoberfläche; Erfassen des von der Messvorrichtung gemessenen Niveaus; Vergleichen des theoretischen Niveaus mit dem gemessenen Niveau; und Wiederholen der Schritte und Vergleichen des theoretischen und des gemessenen Niveaus für mindestens einen zweiten vorbestimmten Druck.

Der Erfindung liegt daher die Aufgabe zugrunde, eine Möglichkeit zum Kalibrieren, Verifizieren und/oder Justieren eines Füllstandsmessgeräts mit verkürzter Standzeit anzugeben.

Die Aufgabe wird gelöst durch ein Verfahren nach Anspruch 1, zur Vor-Ort Kalibrierung eines Füllstandsmessgeräts, sowie durch ein Vor-Ort Kalibriermodul nach Anspruch 11.

In dem Verfahren zur Vor-Ort Kalibrierung eines Füllstandsmessgeräts wird ein Verfahren zur Bestimmung eines restlichen Leervolumens verwendet, mit dem das restliche Leervolumen in einem zur Aufnahme eines Prozessmediums vorgesehenen und druckdicht verschließbaren Behälter bestimmt wird, wobei es sich bei dem restlichen Leervolumen um ein restliches, von einem Medium, insbesondere dem Prozessmedium oder einem Reinigungsmedium, einnehmbares Volumen des Behälters handelt, umfassend zumindest die Schritte:

- Messen eines in dem Behälter anfänglich vorliegenden ersten Drucks p0;
- Einströmen eines gasförmigen Druckerhöhungsmediums durch einen Zulauf in den Behälter, wobei das in den Behälter eingeströmte Druckerhöhungsmedium das restliche Leervolumen einnimmt und der anfänglich vorliegende Druck auf einen erhöhten Druck erhöht wird;
- Messen des erhöhten Drucks ph;
- Bestimmung der durch das Einströmen des Druckerhöhungsmediums verursachten Druckerhöhung $\Delta p = ph - p0$;
- Ermittlung eines Volumens des in den Behälter eingeströmten Druckerhöhungsmediums;
- Messen einer in dem Behälter vorliegenden Temperatur;
- Bestimmung des restlichen Leervolumens anhand der Druckerhöhung $\Delta p$, des Volumens des Druckerhöhungsme-diums und der Temperatur.

Ein ähnliches Verfahren zur Bestimmung eines restlichen Leervolumens ist aus US 6,038,919 A bekannt.

In einer Ausgestaltung des Verfahrens wird das restliche Leervolumen wie folgt aus der Druckerhöhung, dem Volumen des Druckerhöhungsmediums, der Temperatur, sowie aus einer vorgebbaren Bezugstemperatur und einem vorgebbaren Bezugsdruck bestimmt:

$$V\_leer = V\_Mtest \cdot \frac{T + Tn}{Tn} \cdot \frac{pn}{\Delta p + pn}$$

In obiger Formel bezeichnet V_leer das restliche Leervolumen, $\Delta p$ die Druckerhöhung, V_Mtest das Volumen des Druckerhöhungsmediums und T die Temperatur. Bei Tn handelt um die vorgebbare Bezugstemperatur und bei pn um den vorgebbaren Bezugsdruck, bsp. eine Normtemperatur und einen Normdruck. Beispiele für eine Normtemperatur und einen Normdruck sind 273,15° Kelvin bzw. 1013,25 Hektopascal (hPa).

In einer Weiterbildung des Verfahrens umfasst dieses die Schritte:

- Kontinuierliches Messen eines Volumen-Durchflusses des Druckerhöhungsmediums während des Einströmens des Druckerhöhungsmediums durch den Zulauf in den Behälter mittels eines an dem Zulauf angebrachten Durchfluss-Messgeräts, insbesondere mittels eines Coriolis-Durchfluss-Messgeräts;
- Bestimmung des Volumens des in den Behälter eingeströmten Druckerhöhungsmediums mittels des gemessenen Volumen-Durchflusses beim Einströmen.

Das Volumen des in den Behälter eingebrachten Druckerhöhungsmediums wird anhand der Bilanzierung des durch den Zulauf in den Behälter geströmten Druckerhöhungs-mediums mittels des Durchflussmessgeräts bestimmt. Die Genauigkeit des Verfahrens zur Bestimmung des restlichen Leervolumens wird durch die Genauigkeit der Messung der Temperatur, des Drucks und des Volumens des Druckerhöhungsmediums beeinflusst. Die Verwendung eines Coriolis-Messgeräts als des Durchflussmessgerät ist aufgrund seiner hohen Genauigkeit vorteilhaft. Selbstverständlich ist im Rahmen der Erfindung die Verwendung anderer aus dem Stand der Technik bekannter Durchflussmessgeräte, bsp.

Ultraschall- Durchflussmessgeräte, thermische Durchflussmessgeräte, magnetisch-induktiver Durchflussmessgeräte etc. auch möglich.

In einer Ausgestaltung des Verfahrens umfasst dieses die Schritte:

- Vorgabe eines vorgebbaren Soll-Drucks und/oder einer vorgebbaren Soll-Druckerhöhung;
- Übermittlung des gemessenen, anfänglich vorliegenden ersten Drucks an eine zum Ansteuern einer Ventileinheit ausgestalten Regel-/Auswerteeinheit;
- Im Wesentlichen kontinuierliches Messen während des Einströmens des dabei vorliegenden, erhöhten zweiten Drucks und Übermittlung des gemessenen erhöhten zweiten Drucks an die Regel-/Auswerteeinheit;
- Ansteuern der Ventileinheit durch die Regel-/Auswerteeinheit derart, dass das Druckerhöhungsmedium solange in den Behälter einströmt, bis der erhöhte zweite Druck den vorgegebenen Soll-Druck und/oder bis die Druckerhöhung die vorgegebene Soll-Druckerhöhung erreicht.

Die Ventileinheit umfasst insbesondere zumindest ein von der Regel-/Auswerteeinheit ansteuerbares Ventil. In diesem Fall handelt es sich also um eine Druck-geregelte Regelung. Sobald der Soll-Druck und/oder die Soll-Druckerhöhung erreicht ist, wird von der Ventileinheit der Zulauf verschlossen. Die von der Regel-/Auswerteeinheit ansteuerbare Ventileinheit ist hierzu beispielsweise angrenzend zu dem Durchflussmessgerät angeordnet, vorzugsweise in Bezug auf die Einströmrichtung des Druckerhöhungsmediums vor dem Durchflussmessgerät. Dadurch wird Druckerhöhungsmedium, welches das Durchflussmessgerät durchströmt und damit bei der Bilanzierung des Volumens des Druckerhöhungsmediums berücksichtigt ist, in jedem Fall auch in den Behälter geleitet

Alternativ ist es auch möglich, eine Volumen-gesteuerte Regelung des Verfahrens vorzunehmen. In einer alternativen Ausgestaltung des Verfahrens umfasst dieses daher die Schritte:

- Vorgabe eines vorgebbaren Soll-Volumens des Druckerhöhungsmediums;
- Im Wesentlichen kontinuierliches Übermitteln des vom Durchflussmessgerät gemessenen Volumen des eingeströmten Druckerhöhungsmediums an die Regel-/Auswerteeinheit während des Einströmens;
- Ansteuern der Ventileinheit durch die Regel-/Auswerteeinheit derart, dass das Druckerhöhungsmedium solange in den Behälter einströmt, bis das gemessenen Volumen das vorgebbare Soll-Volumen erreicht.

Die Schritte des Verfahrens zur Bestimmung eines restlichen Leervolumens werden mit einem Behälter durchgeführt, in dem sich ein Medium, insbesondere ein Reinigungsmedium oder das Prozessmedium, befindet, so dass das restliche Leervolumen (V_leer) für den mit Medium gefüllten Behälter bestimmt wird, und wobei das Volumen des Mediums in dem Behälter (Vmed) anhand einer Differenz zwischen einem von einem Medium, insbesondere von dem Prozessmedium oder von einem Reinigungsmedium, einnehmbaren Gesamtleervolumen (V_gesleer) in dem leeren Behälter und dem restlichen Leervolumen (V_mleer) für den mit Medium gefüllten Behälter bestimmt wird:

$$Vmed = V\_gesleer - V\_mleer$$

Das Volumen des Mediums Vmed in dem mit Medium gefüllten Behälter entspricht dem restlichen Leervolumen V_mleer- bis auf das Vorzeichen und eine konstante Verschiebung durch ein von dem Medium einnehmbares Gesamtleervolumen. Um das Volumen des Mediums Vmed in dem Behälter zu erhalten, wird also von dem Gesamtleervolumen das restliche Leervolumen V_mleer abgezogen. Der große Vorteil dieses Verfahrens ist, dass das Volumen des Mediums in dem Behälter bestimmt wird, ohne dass dieses aus dem Behälter ausgeleitet werden muss.

Die konstante Verschiebung lässt sich bsp. einmalig, insb. bei Inbetriebnahme des Füllstandmessgeräts, bestimmen. In einer Weiterbildung des Verfahrens werden die Schritte des Verfahrens mit einem leeren Behälter durchgeführt, wobei das dabei bestimmte restliche Leervolumen des leeren Behälters als das von einem Medium, insbesondere von dem Prozessmedium oder von einem Reinigungsmedium, einnehmbare Gesamtleervolumen in dem leeren Behälter bestimmt wird.

Hinsichtlich des Verfahrens zur Vor-Ort Kalibrierung eines Füllstandsmessgeräts wird die Aufgabe gelöst durch ein Verfahren zur Vor-Ort Kalibrierung eines Füllstandsmessgeräts, dass zur Bestimmung und/oder Überwachung eines Füllstands eines Mediums in dem Behälter, insbesondere eines Prozessmediums oder Reinigungsmediums, ausgestaltet ist,

wobei es sich insbesondere um ein berührungslos arbeitendes Füllstandsmessgerät handelt, umfassend zumindest die Schritte:

- Ermitteln des Volumens des Mediums in dem Behälter über ein Verfahren zur Bestimmung des restlichen Leervolumens in einem zur Aufnahme eines Prozessmediums vorgesehenen und druckdicht verschließbaren Behälter, in welchem Behälter sich ein Medium, insbesondere ein Reinigungsmedium oder das Prozessmedium, befindet, so dass das restliche Leervolumen (V_leer) für den mit Medium gefüllten Behälter bestimmt wird, wobei es sich bei dem restlichen Leervolumen um ein restliches, von einem Medium, insbesondere dem Prozessmedium oder einem Reinigungsmedium, einnehmbares Volumen des Behälters handelt, das Verfahren zur Bestimmung des restlichen Leervolumens umfassend die Schritte:

- Messen eines in dem Behälter anfänglich vorliegenden ersten Drucks p0;
- Einströmen eines gasförmigen Druckerhöhungsmediums durch einen Zulauf in den Behälter, wobei das in den Behälter eingeströmte Druckerhöhungsmedium das restliche Leervolumen einnimmt und der anfänglich vorliegende erste Druck p0 auf einen erhöhten zweiten Druck ph erhöht wird;
- Messen des erhöhten zweiten Drucks ph;
- Bestimmung der durch das Einströmen des Druckerhöhungsmediums verursachte Druckerhöhung $\Delta p$ = php0;
- Ermittlung eines Volumens (V_Mtest) des in den Behälter eingeströmten Druckerhöhungsmediums;
- Messen einer in dem Behälter vorliegenden Temperatur T;
- Bestimmung des restlichen Leervolumens V_leer anhand der Druckerhöhung $\Delta p$, des Volumens V_Mtest des Druckerhöhungsmediums und der Temperatur T,

wobei das Volumen des Mediums (Vmed) in dem Behälter anhand einer Differenz zwischen einem von einem Medium einnehmbaren Gesamtleervolumen (V_gesleer) in dem leeren Behälter und dem restlichen Leervolumen (V_leer) für den mit Medium gefüllten Behälter bestimmt wird:

$$Vmed = V\_gesleer - V\_leer$$

- Messen des Füllstands des Mediums in dem Behälter mit dem Füllstandsmessgerät;
- Ermittlung eines Volumens des Mediums in dem Behälter mit dem Füllstandsmessgerät anhand einer, insbesondere anfänglich bestimmten, hinterlegten Relation zwischen dem mit dem Füllstandsmessgerät gemessenen Füllstand und einem vom Füllstand abhängigen Volumen des Mediums in dem Behälter;
- Feststellen, Dokumentieren und/oder Anzeigen zumindest des Unterschieds zwischen dem durch das Füllstandsmessgerät ermittelte Volumen des Mediums in dem Behälter und dem über das Verfahren zur Bestimmung des restlichen Leervolumens ermittelten Volumen des Mediums in dem Behälter.

Bei dem Verfahren zur Vor-Ort Kalibrierung des Füllstandsmessgeräts wird also das Volumen des Mediums in dem Behälter ein erstes Mal anhand des Verfahrens zur Bestimmung eines restlichen Leervolumens ermittelt und als Referenzvolumen für das Volumen des Mediums in dem Behälter verwendet, und ein zweites Mal mit dem Füllstandsmessgerät ermittelt. Beim Kalibrieren, Verifizieren und/oder Justieren des Füllstandsmessgeräts wird anschließend das mit dem Füllstandsmessgeräts ermittelte Wert mit dem Referenzvolumen verwendet.

Zur Umrechnung des von dem Füllstandsmessgerät angezeigten Füllstands in ein Volumen wird die vorstehend genannte anfänglich bestimmte, insb. in der Regel-/Auswerteeinheit hinterlegte, Relation Vmed(L) zwischen dem mit dem Füllstandsmessgerät gemessenen Füllstand und dem vom Füllstand abhängigen Volumen des Mediums in dem Behälter verwendet. Diese Relation wird insbesondere wie vorstehend erwähnt dadurch anfänglich bestimmt, dass ein Testmedium mit bekannten Volumen in den Behälter gebracht wird, bsp. vor Inbetriebnahme des Füllstandsmessgeräts, um den vom Füllstandsmessgerät angezeigten Füllstand (anfänglich als korrekt angenommen) mit dem bekannten Volumen zu korrelieren und daraus eine Kalibrierkurve zu ermitteln. Diese Kalibrierkurve wird als konstant angenommen, so dass eine im späteren Betreib auftretende Abweichung zwischen dem mit dem Füllstandsmessgerät bestimmten Volumen und dem mit dem Verfahren zur Bestimmung des restlichen Leervolumens in dem Behälter bestimmten Volumen einer Drift des Füllstandsmessgeräts zugerechnet wird.

Die Vorteile des Verfahrens zur Vor-Ort Kalibrierung des Füllstandsmessgeräts sind die folgenden:

- Wie vorstehend genannt kann bei der Bestimmung des Volumens des Mediums das Medium in dem Behälter verbleiben kann. Dadurch ist das Verfahren zur Vor-Ort-Kalibrierung des Füllstandsmessgeräts sehr einfach in einen bestehen Prozess integrierbar. Das Volumen des Mediums in dem Behälter kann z.B. während einer vergleichsweise kurzen Unterbrechung des Prozesses bestimmt werden. Dies insbesondere im Vergleich zu einer Unterbrechung, bei der zur Kalibrierung des Füllstandsmessgeräts der Behälter über einen Zulauf geleert werden muss, um anschließend ein Testmedium mit einem bekannten Volumen in den Behälter zu leiten, bsp. über ein an dem Zulauf angebrachtes Durchflussmessgerät.

- Eine Drift des Füllstandsmessgeräts kann ohne dessen Ausbau bestimmt werden. Das Füllstandsmessgerät kann somit zum Kalibrieren, Verifizieren und/oder Justieren in seiner prozessnahen Anordnung verbleiben, z.B. für den Fall, dass es an dem Behälter angebracht ist, in seiner Einbaulage.
- Im Stand der Technik wird wie oben bereits erwähnt das relativ teure WFI-Wasser auch als Testmedium bei der Re-Kalibrierung des Füllstandsmessgeräts verwendet. Das erfindungsgemäße Verfahren zur Vor-Ort Kalibrierung des Füllstandsmessgeräts benötigt kein derartiges Testmedium, sondern nur das Druckerhöhungsmedium. An dieses liegen weniger strenge Anforderungen vor, so dass im erfindungsgemäßen Verfahren wesentlich günstigere Medien als Druckerhöhungsmedium verwendet werden können, je nach Ausgestaltung bsp. CO2 oder sogar Umgebungsluft.

In einer Ausgestaltung des Verfahrens zur Vor-Ort Kalibrierung des Füllstandsmessgeräts umfasst dieses den Schritt;

- Justierung des Füllstandsmessgeräts, wobei der Messwert des Füllstandsmessgeräts derart angepasst wird, dass das mit dem Füllstandsmessgerät ermittelte Volumen des Mediums in dem Behälter mit dem durch das Verfahren zur Bestimmung des restlichen Leervolumens ermittelten Volumens des Mediums in dem Behälter übereinstimmt.

In einer Weiterbildung des Verfahrens zur Vor-Ort Kalibrierung des Füllstandsmessgeräts wird als Druckerhöhungsmedium Umgebungsluft oder ein hochreines Gas, insbesondere gereinigte Umgebungsluft oder CO2 verwendet. Die Wahl des Druckerhöhungsmediums wird z.B. dadurch bestimmt, und um welche Art von Medium es sich handelt. Handelt es sich bsp. um Reinigungsmedium, liegen im Wesentlichen keine Anforderungen an das Druckerhöhungsmedium vor. Handelt es sich um Prozessmedium, so sollte sichergestellt sein, dass das Druckerhöhungsmedium nicht mit dem Prozessmedium ungünstig wechselwirkt. In den vorstehend genannten Industrien kann z.B. für eine Vielzahl von Prozessmedien als Druckerhöhungsmedium CO2 verwendet werden.

In einer Ausgestaltung des Verfahrens zur Vor-Ort Kalibrierung des Füllstandsmessgeräts wird bei dem Einströmen des Druckerhöhungsmediums eine unter Druck stehende Gasflasche oder ein Druckluftsystem einer Prozessanlage verwendet, in welcher das Vor-Ort Verfahren zur Kalibrierung eines Füllstandsmessgeräts durchgeführt wird. In der unter Druck stehenden Gasflasche ist dann z.B. das gewählte Druckerhöhungsmedium enthalten. Liegen- je nach Ausgestaltung des Verfahrens - im Wesentlichen kaum Anforderungen an die Reinheit des Druckerhöhungsmediums vor, kann vorteilhaft auch das oftmals bereits bestehende Druckluftsystem der Prozessanlage verwendet werden, und gereinigte oder ungereinigte Umgebungsluft zu verwenden.

In einer besonders vorteilhaften Ausgestaltung des Verfahrens zur Vor-Ort Kalibrierung des Füllstandsmessgeräts erfolgt die Vor-Ort Kalibrierung des Füllstandsmessgeräts nach einer Reinigung des Behälters mit einem Reinigungsmedium, wobei das Reinigungsmedium als das bei der Vor-Ort Kalibrierung verwendete Medium dient, und wobei insbesondere nach der Vor-Ort Kalibrierung des Füllstandsmessgeräts eine Dampfsterilisation des Behälters erfolgt.

In dieser Ausgestaltung ist das Verfahren zur Vor-Ort Kalibrierung besonders vorteilhaft in bestehende Prozesse integriert, da in den vorstehend genannten Industrien ohnehin in regelmäßigen Abständen derartige sog. Vor-Ort-Reinigungen (englisch "Cleaning-in-Place" oder kurz: CIP-Reinigung) mit Reinigungsmedium erfolgen müssen. Für den Fall, dass anschließend zur Vor-Ort Kalibrierung eine Dampfsterilisation des Behälters erfolgt, liegen im Wesentlichen keine Einschränkungen an die Art des Druckerhöhungsmediums vor.

In einer weiteren Ausgestaltung des Verfahrens wird das Druckerhöhungsmedium anschließend wieder aus dem Behälter ausgeströmt, bsp. indem eine Ventileinheit an dem Behälter geöffnet wird. Dadurch wird der beim Verfahren zur Bestimmung des restlichen Leervolumens erzeugte erhöhte Druck zumindest teilweise wieder abgebaut.

In einer Ausgestaltung des Verfahrens wird ein unkomprimierbares Medium verwendet, welches also in dem Verfahren zur Vor-Ort Kalibrierung des Füllstandsmessgerät auch unter dem erhöhten Druck sein Volumen beibehält. Ob dies der Fall ist, kann dadurch überprüft werden, ob der von dem Füllstandsmessgerät angezeigte Füllstand während der Durchführung des Verfahrens im Wesentlichen konstant bleibt.

Ändert sich während der Durchführung des Verfahrens der vom Füllstandsmessgerät angezeigte Füllstand, wird hingegen eine durch den erhöhten zweiten Druck bedingte Komprimierung des Mediums festgestellt. Eine durch das Druckerhöhungsmedium bedingte Komprimierung des Mediums wird durch das Füllstandsmessgerät als eine Änderung des Füllstands L -> L' mitgemessen, wobei h' den Füllstand bei dem komprimierten Volumen bezeichnet. In diesem Fall kann zum Einen zunächst das komprimierte Volumen $V_{med}'(L')$ des Mediums in dem Behälter bestimmt werden, dieses anschließend mit Hilfe der anfänglich hinterlegten Kalibrierkurve zu einem korrigierten, unkomprimierten Volumen $V_{med}(L)$ korrigiert werden und das unkomprimierte Volumen V und der unkomprimierte Füllstand L zur Kalibrierung, Verifizierung und/oder Justierung des Füllstandsmessgeräts verwendet werden. Diese Komprimierungs-Korrektur ist allerdings nicht unbedingt notwendig, da alternativ auch das komprimierte Volumen V' und der Füllstand L' bei dem komprimierten Volumen $V_{med}'(L')$ zur Kalibrierung, Verifizierung und/oder Justierung des Füllstandsmessgeräts verwendet werden kann.

Hinsichtlich des Vor-Ort Kalibriermoduls wird die Aufgabe gelöst durch ein Kalibriermodul, das zur Ausführung des erfindungsgemäßen Verfahren zur Vor-Ort Kalibrierung eines Füllstandmessgeräts ausgestaltet ist. Das Vor-Ort Kalibriermodul umfasst ein an dem Zulauf angeordnetes Durchflussmessgerät, ein zum Messen des anfänglichen Drucks und des erhöhten zweiten Drucks ausgestaltetes Druckmessgerät, ein zum Messen der Temperatur in dem Behälter ausgestaltetes Temperaturmessgerät, und eine Regel-/Auswerteeinheit.

In einer Ausgestaltung des Vor-Ort Kalibriermoduls sind das Druckmessgerät und/oder das Temperaturmessgerät an dem Zulauf angeordnet. Alternativ können das Temperaturmessgerät und/oder das Druckmessgerät auch im Behälter angeordnet sein.

In einer weiteren Ausgestaltung des Vor-Ort Kalibriermoduls ist das Vor-Ort Kalibriermodul als ein mobiles Vor-Ort Kalibriermodul ausgestaltet, welches insbesondere mit einer zweiten, an dem Behälter angeordneten Ventileinheit verbindbar ist. Über die zweite Ventileinheit ist das Vor-Ort Kalibriermodul reversibel mit dem Behälter verbindbar.

In einer weiteren Ausgestaltung des Vor-Ort Kalibriermoduls ist das Vor-Ort Kalibriermodul an dem Behälter angeordnet und mit dem Behälter fest verbunden. Beispielsweise ist für mehrere Behälter in der Prozessanlage jeweils für jeden Behälter ein erfindungsgemäßes Vor-Ort Kalibriermodul vorgesehen und einem Behälter zugeordnet, dass jeweils ein Füllstandsmessgerät, ein Durchflussmessgerät, ein Temperaturmessgerät und eine Regel-/Auswerteeinheit umfasst.

Die Erfindung wird anhand der nachfolgenden, nicht maßstabsgetreuen Figuren näher erläutert, wobei gleiche Bezugszeichen gleiche Merkmale bezeichnen. Wenn es die Übersichtlichkeit erfordert oder es anderweitig sinnvoll erscheint, wird auf bereits erwähnte Bezugszeichen in nachfolgenden Figuren verzichtet. Es zeigt:

Fig. 1: Eine Ausgestaltung des in der Erfindung verwendeten Verfahrens zur Bestimmung des restlichen Leervolumens; und
Fig. 2: Eine Ausgestaltung des erfindungsgemäßen Verfahrens zur Vor-Ort Kalibrierung eines Füllstandsmessgeräts sowie eine Ausgestaltung des erfindungsgemäßen Vor-Ort-Kalibriermoduls.

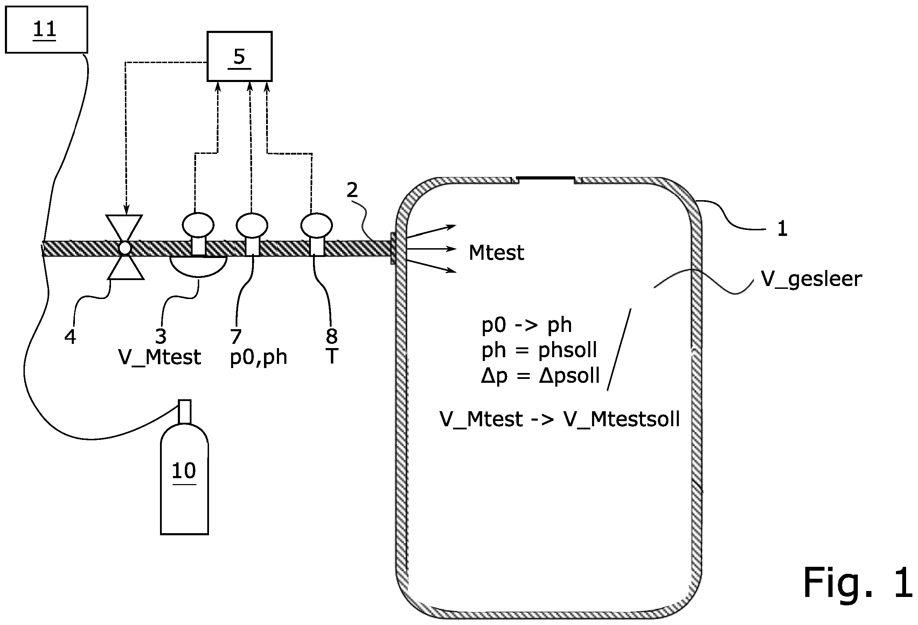

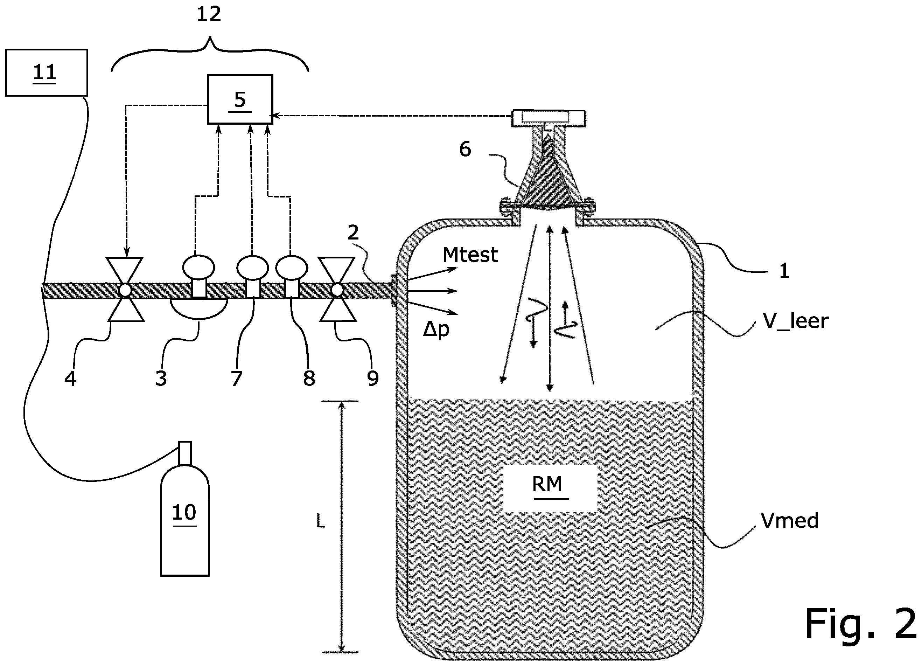

In Figur 1 ist eine Ausgestaltung des in der Erfindung verwendeten Verfahrens zur Bestimmung des restlichen Leervolumens V_leer dargestellt. Das Verfahren wird in dieser Ausgestaltung bei einem leeren Behälter 1 durchgeführt, um damit das gesamte, im leeren Behälter 1 für ein Medium zur Verfügung stehende und von dem Medium einnehmbare Gesamtleervolumen V_gesleer zu ermitteln. Die Ermittlung des Gesamtleervolumens V_gesleer erfolgt einmalig, bsp. initial vor Inbetriebnahme eines Füllstandsmessgeräts 6 in einer Prozessanlage (siehe Fig. 2). Nicht näher dargestellt sind in dieser Ausgestaltung weitere Zu- und/oder Abläufe des Behälters 1, durch welche etwa ein Prozessmedium PM oder ein Reinigungsmedium RM zu- bzw. abgeleitet werden kann, sowie ggf. im Behälter 1 vorhandene Einbauten, bsp. Rührwerke oder weitere Feldgeräte. Um das restliche Leervolumen V_leer (in diesem Spezialfall: das Gesamtleervolumen V_gesleer) zu ermitteln, wird über einen Zulauf 2 ein Druckerhöhungsmedium Mtest in den Behälter 1 eingeströmt. Bei dem Druckerhöhungsmediums Mtest handelt es sich bevorzugt um ein gasförmiges Medium.

Das Druckerhöhungsmedium Mtest ist in dieser Ausgestaltung ggf. gereinigte Umgebungsluft, welche mittels eines in der Prozessanlage vorhandenen Druckluftsystems 11 in den druckdicht verschlossenen Behälter 1 eingebracht wird. Alternativ wird hierzu bsp. eine unter Druck stehende und das Druckerhöhungsmedium Mtest enthaltende Gasflasche 10 verwendet. Während das Druckerhöhungsmedium Mtest in den Behälter 1 einströmt, wird kontinuierlich der Volumendurchfluss des Druckerhöhungsmediums Mtest durch den Zulauf 2 ermittelt. Hierzu wird Durchfluss-Messgerät 3, bevorzugt ein sehr genaues Coriolis-Durchflussmessgerät, verwendet, mit dem das Volumen V_Mtest des gesamten in den Behälter 1 eingeströmten Druckerhöhungsmediums Mtest ermittelt und an eine Regel-/Auswerteinheit 5 übermittelt wird. Die Regel-/Auswerteeinheit 5 dient der Auswertung der von den Messgeräten 3,7,8 übermittelten Messwerten und/oder zumindest der Regelung einer Ventileinheit 4. Die Ventileinheit 4 umfasst hier zumindest ein von der Regel-/Auswerteeinheit 5 ansteuerbares und zur Absperrung des Zulaufs ausgestaltetes Ventil.

Vor bzw. während des Einströmens des Druckerhöhungsmediums Mtest in den Behälter 1 wird der in dem Behälter 1 anfänglich vorliegende Druck p0 bzw. eine durch das Einströmen des Druckerhöhungsmediums Mtest bedingte Druckerhöhung Δp und/oder der erhöhte Druck ph im Behälter 1 ermittelt. Hierzu ist an dem Zulauf 2 ein Druckmessgerät 7 angeordnet, welches die von ihm gemessenen Messwerte an die Regel-/Auswerteeinheit übermittelt. Das Druckerhöhungsmediums Mtest wird bei einer Druck-gesteuerten Regelung solange in den Behälter 1 eingeströmt, bis in dem Behälter 1 ein vorgebbarer erhöhter Soll-Druck phsoll vorliegt bzw. eine vorgebbare Soll-Druckerhöhung Δpsoll erreicht ist. Bei Erreichen der Soll-Druckerhöhung Δpsoll wird von der Regel-/Auswerteeinheit 5 die Ventileinheit 4 derart angesteuert, dass der Zulauf 2 verschlossen ist und kein weiteres Druckerhöhungsmediums Mtest mehr in den Behälter 1 strömt. Die Ventileinheit 4 ist hierzu in Bezug auf die Einströmrichtung des Druckerhöhungsmediums Mtest vor dem Durchfluss-Messgerät 3 angeordnet.

Alternativ zu der hier dargestellten Druck-gesteuerten Regelung ist eine Volumen-gesteuerte Regelung möglich. Bei letzterer wird solange das Druckerhöhungsmedium Mtest eingeströmt, bis das mithilfe des Durchfluss-Messgeräts 3 ermittelte Volumen V_Mtest des gesamten in den Behälter 1 eingeströmten Druckerhöhungsmediums Mtest mit einem vorgebbaren Soll-Volumen übereinstimmt.

Gleichzeitig wird mit einem an dem Zulauf 2 angeordneten Temperaturmessgerät 8 die im Behälter vorliegende Temperatur T ermittelt. Alternativ können das Druckmessgerät 7 und/oder das Temperaturmessgerät 8 auch im Behälter 1 angeordnet sein.

Es wird nun ein Bezugsdruck pn und eine Bezugstemperatur Tn vorgegeben. Vorzugsweise handelt es sich bei dem Bezugsdruck pn und der Bezugstemperatur Tn um einen bei Normbedingungen vorliegenden Umgebungsdruck von 1013,25 Hektopascal (hPa) bzw. um eine Umgebungstemperatur von 273,15° Kelvin. Das restliche Leervolumen V_leer wird folgendermaßen aus dem gemessen Volumen V_Mtest des in den Behälter 1 eingeströmten Druckerhöhungsmediums Mtest, der ermittelten Druckerhöhung $\Delta p$ und der gemessenen Temperatur T und Bezugsdruck pn bzw. -temperatur Tn ermittelt:

$$V\_leer = V\_Mtest \cdot \frac{T + Tn}{Tn} \cdot \frac{pn}{\Delta p + pn}$$

Das Gesamtleervolumen V_gesleer in dem Behälter wird anschließend als das derart mit dem leeren Behälter 1 ermittelte, restliche Leervolumen V_leer bestimmt. Ist in dem Behälter 1 nun Medium vorhanden (nicht dargestellt), wird völlig analog wie vorstehend erläutert das restliche Leervolumen in dem Behälter 1 mittels des in der Erfindung verwendeten Verfahrens ermittelt. Befindet sich Medium in dem Behälter 1, entspricht das restliche Leervolumen V_leer bis auf eine Konstante dem Negativen des Volumens des Mediums Vmed in dem Behälter 1, wobei es sich bei der Konstanten um das oben beschriebene Gesamtleervolumen V_gesleer handelt. Daher lässt sich das Volumen des Mediums Vmed in dem Behälter 1 folgendermaßen bestimmen.

$$Vmed = V\_gesleer - V\_leer$$

In Figur 2 ist dargestellt, wie das Verfahren zur Bestimmung des restlichen Leervolumens in einem erfindungsgemäßen Verfahren zur Vor-Ort Kalibrierung eines Füllstandsmessgeräts 6 bzw. in einem erfindungsgemäßen Vor-Ort-Kalibriermodul eingesetzt wird.

Bei dem Füllstandsmessgerät 6 handelt es sich in diesem Ausführungsbeispiel um das eingangs erwähnte, auf dem Laufzeit-Verfahren basierende und mit Mikrowellen arbeitende Füllstandsmessgerät, wobei die Erfindung wie vorstehend erwähnt keineswegs auf derartige Füllstandsmessgeräte beschränkt ist.

Das Füllstandsmessgerät 6 dient der Bestimmung und/oder Überwachung des Füllstands L eines Prozessmediums PM in dem Behälter 1.

Das Füllstandsmessgerät ist anfänglich kalibriert, d.h. zeigt einen als korrekt angenommenen Füllstand L an. Dieser Füllstand L wird im Stand der Technik mit dem Volumen Vmed des Mediums in dem Behälter 1 korreliert, da dieses ist eine wichtige Steuer- bzw. Regelgröße, bsp. bei der Herstellung von z.B. Pharmazeutika, darstellt. Hierzu wird, in der Regel bei Inbetriebnahme des Füllstandsmessgeräts 6, ein bekanntes Volumen eines Testmediums, bsp. hochreines WFI-Wasser in den Behälter geleitet. Anhand des bekannten Volumens des Testmediums und dem vom Füllstandsmessgerät 6 angezeigten Füllstands L wird im Rahmen einer sogenannten Linearisierung eine Kalibrierkurve Vmed(L) erstellt, mit der in einem späteren Messbetrieb der vom Füllstandsmessgerät 6 angezeigte Füllstand L in das Volumen Vmed des Mediums in dem Behälter 1 umgerechnet wird. Ggf. wird schon im Rahmen dieser Inbetriebnahme das Volumen Vmed des Testmediums in dem Behälter 1 wie bereits beschreiben über das Verfahren zur Bestimmung des restlichen Leervolumens V_leer bestimmt. Das vom Füllstandsmessgerät 6 ermittelte Volumen Vmed des Testmediums in dem Behälter wird damit abgeglichen bzw. das über das Verfahren zur Bestimmung des restlichen Leervolumens V leer ermittelte Volumen Vmed des Testmedium wird derart angepasst, dass es mit dem vom Füllstandsmessgerät angezeigten Volumen Vmed(L) übereinstimmen.

Um das Füllstandsmessgerät 6 nun nach einem Messbetrieb zu kalibrieren, verifizieren und/oder zu justieren, bsp. in vorgeschriebenen regelmäßigen Abständen, wird das Verfahren zur Bestimmung des restlichen Leervolumens V leer angewandt. Vorteilhaft kann sich hierzu Medium in dem Behälter 1 befinden, und das Füllstandsmessgerät 6 muss nicht ausgebaut werden, sondern das Druckerhöhungsmedium Mtest wird in den Behälter 1 mit darin befindlichen Medium, hier Reinigungsmedium RM, eingebracht.

Das Volumen Vmed des Mediums in dem Behälter 1 wird nun einmal wie bereits beschreiben über das Verfahren zur Bestimmung des restlichen Leervolumens V_leer bestimmt und einmal mit dem Füllstandsmessgerät 6 bestimmt, wobei zur Umrechnung die als konstant angenommene Kalibrierkurve Vmed(L) verwendet wird.

Aufgrund des oben beschriebenen Abgleichs lässt sich eine Abweichung zwischen dem über den Füllstand L ermittelten Volumen Vmed 1 und dem mit dem über das Verfahren zur Bestimmung des restlichen Leervolumens V_leer ermittelten Volumen Vmed auf eine Drift des Füllstandsmessgeräts 6 zurückführen.

Zur Anzeige zumindest des Unterschieds zwischen dem durch das Füllstandsmessgerät 6 ermittelte Volumen Vmed und dem über das Verfahren zur Bestimmung des restlichen Leervolumens V_leer ermittelten Volumen Vmed umfasst das Vor-Ort Kalibriermodul 12 ggf. Anzeigemittel, bsp eine mit der Regel-/Auswerteeinheit 5 verbundene Anzeigeeinheit wie etwa ein Display. Alternativ kann die Anzeige auch über ein separates, ggf. mobiles, Endgerät erfolgen (etwa ein PC, ein Laptop, ein Smartphone, ein Tablet, eine Datenbrille etc.), mit dem die Regel-/Auswerteeinheit 5 mittels eines Kommunikationsnetzwerkes, insbesondere über einen Feldbus der Automatisierungstechnik und/oder über Ethernet, drahtgebunden und/oder drahtlos, kommuniziert.

Bei einer Justierung des Füllstandsmessgeräts 6 wird dieses zusätzlich derart angepasst, dass der angezeigte Füllstand L zu einem Volumen Vmed(L) führt, welches mit dem über das Verfahren zur Bestimmung des restlichen Leervolumens V_leer ermittelten Volumen Vmed des Mediums in dem Behälter 1 übereinstimmt.

Bevorzugt wird das Verfahren zur Vor-Ort Kalibrierung eines Füllstandsmessgeräts 6 in bestehende Prozesse in der Prozessanlage derart integriert, dass eine Standzeit der Prozessanlage minimiert wird. Da in den vorstehend genannten Industrien der Behälter 1 nach der Herstellung einer sogenannten Charge bzw. Batch der Prozess zur regelmäßigen CIP-Reinigung ohnehin unterbrochen werden muss, stellt diese einen bevorzugten Zeitpunkt zur anschließenden Vor-Ort Kalibrierung des Füllstandsmessgeräts 6 dar. Hierzu wird wie in Fig. 2 dargestellt das Verfahren mit dem im Behälter 1 befindlichen und bei der CIP-Reinigung benutzte Reinigungsmedium RM verwendet. Da hier oftmals anschließend an die CIP-Reinigung eine Dampfsterilisation des Behälters 1 erfolgt, liegen zudem im Wesentlichen keine Einschränkungen an das dabei verwendete Druckerhöhungsmedium Mtest vor. Selbstverständlich ist im Rahmen des erfindungsgemäßen Verfahrens auch die Verwendung eines anderen Mediums anstelle des Reinigungsmediums RM möglich, insbesondere des Prozessmediums PM. Je nach Art des Prozessmediums PM ergeben sich dabei dann ggf. Einschränkungen an die Art des Druckerhöhungsmediums Mtest.

Das Durchflussmessgerät 6, das Druckmessgerät 7, das Temperaturmessgerät 8, die Ventileinheit 4 und die Regel-/Auswerteeinheit 5 werden von einem Vor-Ort Kalibriermodul 12 umfasst. Dieses ist entweder mit dem Behälter fest verbunden, oder alternativ über eine zweite Ventileinheit als ein mobiles Vor-Ort Kalibriermodul 12 mit dem Behälter 1 verbindbar, beispielsweise an eine am Behälter 1 angebrachte zweite Ventileinheit 9.

**Bezugszeichen und Symbole**

| | |
|---|---|
| 1 | Behälter |
| 2 | Zulauf |
| 3 | Durchflussmessgerät |
| 4, 9 | Ventileinheit, zweite Ventileinheit |
| 5 | Regel-/Auswerteeinheit |
| 6 | Füllstandsmessgerät |
| 7 | Druckmessgerät |
| 8 | Temperaturmessgerät |
| 10 | Gasflasche |
| 11 | Druckluftsystem |
| 12 | Vor-Ort Kalibriermodul |

| | |
|---|---|
| V_leer | restliches Leervolumen |
| V_gesleer | Gesamtleervolumen |
| PM | Prozessmedium |
| RM | Reinigungsmedium |
| Mtest | Druckerhöhungsmedium |
| V_Mtest | Volumen des Druckerhöhungsmediums |
| V_Mtestsoll | vorgebbares Soll-Volumen |
| Vmed | Volumen des Mediums in dem Behälter |
| p0, ph | erster, zweiter Druck |
| $\Delta p$ | Druckerhöhung |
| pn | vorgebbarer Bezugsdruck |
| phsoll | vorgebbarer Soll-Druck |
| $\Delta psoll$ | vorgebbaren Soll-Druckerhöhung |
| T | Temperatur |
| Tn | vorgebbare Bezugstemperatur |

L                          Füllstand
Vmed(L), Vmed'(L')        Relation zwischen Volumen und Füllstand


**Patentansprüche**

1. Verfahren zur Vor-Ort Kalibrierung eines Füllstandsmessgeräts (6), das zur Bestimmung und/oder Überwachung eines Füllstands (L) eines Mediums in einem Behälter (1), insbesondere eines Prozessmediums (PM) oder Reinigungsmediums (RM), ausgestaltet ist,

wobei es sich insbesondere um ein berührungslos arbeitendes Füllstandsmessgerät (6) handelt, umfassend zumindest die Schritte:

- Ermitteln des Volumens (Vmed) des Mediums in dem Behälter (1) über ein Verfahren zur Bestimmung des restlichen Leervolumens (V_leer) in einem zur Aufnahme eines Prozessmediums (PM) vorgesehenen und druckdicht verschließbaren Behälter (1), in welchem Behälter (1) sich ein Medium, insbesondere ein Reinigungsmedium (RM) oder das Prozessmedium (PM), befindet, so dass das restliche Leervolumen (V_leer) für den mit Medium gefüllten Behälter (1) bestimmt wird, wobei es sich bei dem restlichen Leervolumen (V_leer) um ein restliches, von einem Medium, insbesondere dem Prozessmedium (PM) oder einem Reinigungsmedium (RM), einnehmbares Volumen des Behälters (1) handelt, das Verfahren zur Bestimmung des restlichen Leervolumens (V_leer) umfassend die Schritte:

  ◦ Messen eines in dem Behälter (1) anfänglich vorliegenden ersten Drucks (p0);
  ◦ Einströmen eines gasförmigen Druckerhöhungsmediums (Mtest) durch einen Zulauf (2) in den Behälter (1), wobei das in den Behälter (1) eingeströmte Druckerhöhungsmedium (Mtest) das restliche Leervolumen (V_leer) einnimmt und der anfänglich vorliegende erste Druck (p0) auf einen erhöhten zweiten Druck (ph) erhöht wird;
  ◦ Messen des erhöhten zweiten Drucks (ph);
  ◦ Bestimmung der durch das Einströmen des Druckerhöhungsmediums (Mtest) verursachten Druckerhöhung $\Delta p = ph - p0$;
  ◦ Ermittlung eines Volumens (V_Mtest) des in den Behälter (1) eingeströmten Druckerhöhungsmediums (Mtest);
  ◦ Messen einer in dem Behälter (1) vorliegenden Temperatur (T);
  ◦ Bestimmung des restlichen Leervolumens (V_leer) anhand der Druckerhöhung $\Delta p$, des Volumens (V_Mest) des Druckerhöhungsmediums (Mtest) und der Temperatur (T),

wobei das Volumen (Vmed) des Mediums in dem Behälter (1) anhand einer Differenz zwischen einem von einem Medium einnehmbaren Gesamtleervolumen (V_gesleer) in dem leeren Behälter (1) und dem restlichen Leervolumen (V_leer) für den mit Medium gefüllten Behälter (1) bestimmt wird:

$$Vmed = V\_gesleer - V\_leer$$

- Messen des Füllstands (L) des Mediums in dem Behälter (1) mit dem Füllstandsmessgerät (6);
- Ermittlung eines Volumens des Mediums (Vmed) in dem Behälter (1) mit dem Füllstandsmessgerät (6) anhand einer, insbesondere anfänglich bestimmten, hinterlegten Relation (Vmed(h)) zwischen dem mit dem Füllstandsmessgerät (6) gemessenen Füllstand (L) und einem vom Füllstand (L) abhängigen Volumen (Vmed) des Mediums in dem Behälter (1);
- Feststellen, Dokumentieren und/oder Anzeigen zumindest des Unterschieds zwischen dem durch das Füllstandsmessgerät (6) ermittelten Volumen (Vmed) des Mediums in dem Behälter (1) und dem über das Verfahren zur Bestimmung des restlichen Leervolumens (V_leer) ermittelten Volumen (Vmed) des Mediums in dem Behälter (1).

2. Verfahren nach Anspruch 1,

wobei das restliche Leervolumen (V_leer) wie folgt aus der Druckerhöhung $\Delta p$, dem Volumen (V_Mtest) des Druckerhöhungsmediums (Mtest), der Temperatur (T), sowie aus einer vorgebbaren Bezugstemperatur (Tn) und einem vorgebbaren Bezugsdruck (pn) bestimmt wird:

$$V\_leer = V\_Mtest \cdot \frac{T + Tn}{Tn} \cdot \frac{pn}{\Delta p + pn}$$

wobei es sich bei Tn um die vorgebbare Bezugstemperatur und bei pn um den vorgebbaren Bezugsdruck handelt.

3. Verfahren nach Anspruch 1 oder 2,
umfassend die Schritte:

- Kontinuierliches Messen eines Volumen-Durchflusses des Druckerhöhungsmediums (Mtest) während des Einströmens des Druckerhöhungsmediums (Mtest) durch den Zulauf (2) in den Behälter (1) mittels eines an dem Zulauf (2) angebrachten Durchfluss-Messgeräts (3), insbesondere mittels eines Coriolis-Durchfluss-Messgeräts;
- Bestimmung des Volumens (V_Mtest) des in den Behälter (1) eingeströmten Druckerhöhungsmediums (Mtest) mittels des gemessenen Volumen-Durchflusses beim Einströmen.

4. Verfahren nach zumindest einem der vorherigen Ansprüche,
umfassend die Schritte:

- Vorgabe eines vorgebbaren Soll-Drucks (phsoll) und/oder einer vorgebbaren Soll-Druckerhöhung (Δpsoll);
- Übermittlung des gemessenen, anfänglich vorliegenden ersten Drucks (p0) an eine zum Ansteuern einer Ventileinheit (4) ausgestalten Regel-/Auswerteeinheit (5);
- Im Wesentlichen kontinuierliches Messen während des Einströmens des dabei vorliegenden, erhöhten zweiten Drucks (ph) und Übermittlung des gemessenen erhöhten zweiten Drucks (ph) an die Regel-/Auswerteeinheit (5);
- Ansteuern der Ventileinheit (4) durch die Regel-/Auswerteeinheit (5) derart, dass das Druckerhöhungsmedium (Mtest) solange in den Behälter (1) einströmt, bis der erhöhte zweite Druck (ph) den vorgegebenen Soll-Druck (phsoll) und/oder bis die Druckerhöhung (Δp) die vorgegebene Soll-Druckerhöhung (Δpsoll) erreicht.

5. Verfahren nach zumindest einem der vorherigen Ansprüche 1 bis 3,
umfassend die Schritte:

- Vorgabe eines vorgebbaren Soll-Volumens (V_Mtestsoll) des Druckerhöhungsmediums (Mtest);
- Im Wesentlichen kontinuierliches Übermitteln des vom Durchflussmessgerät (3) gemessenen Volumen (V_Mtest) des eingeströmten Druckerhöhungsmediums (Mtest) an die Regel-/Auswerteeinheit (5) während des Einströmens;
- Ansteuern einer Ventileinheit (4) durch die Regel-/Auswerteeinheit (5) derart, dass das Druckerhöhungsmedium (Mtest) solange in den Behälter (1) einströmt, bis das gemessene Volumen (V_Mtest) das vorgebbare Soll-Volumen (V_Mtestsoll) erreicht.

6. Verfahren nach zumindest einem der vorherigen Ansprüche,

wobei das Gesamtleervolumen (V_ gesleer) mittels eines Verfahrens zur Bestimmung des restlichen Leervolumens (V_leer) mit dem leeren Behälter (1) ermittelt wird,
das Verfahren zur Bestimmung des restlichen Leervolumens (V_leer) umfassend die Schritte:

- Messen eines in dem Behälter (1) anfänglich vorliegenden ersten Drucks (p0);
- Einströmen eines gasförmigen Druckerhöhungsmediums (Mtest) durch einen Zulauf (2) in den Behälter (1), wobei das in den Behälter (1) eingeströmte Druckerhöhungsmedium (Mtest) das restliche Leervolumen (V_leer) einnimmt und der anfänglich vorliegende erste Druck (p0) auf einen erhöhten zweiten Druck (ph) erhöht wird;
- Messen des erhöhten zweiten Drucks (ph);
- Bestimmung der durch das Einströmen des Druckerhöhungsmediums (Mtest) verursachten Druckerhöhung Δp = ph- p0;
- Ermittlung eines Volumens (V_Mtest) des in den Behälter (1) eingeströmten Druckerhöhungsmediums (Mtest);
- Messen einer in dem Behälter (1) vorliegenden Temperatur (T);
- Bestimmung des restliche Leervolumens (V_leer) anhand der Druckerhöhung Δp, des Volumens (V_Mest) des Druckerhöhungsmediums (Mtest) und der Temperatur (T),

und wobei das dabei bestimmte restliche Leervolumen (V_leer) des leeren Behälters (1) als das von einem Medium, insbesondere von dem Prozessmedium (PM) oder von einem Reinigungsmedium (RM), einnehmbare Gesamtleervolumen (V_gesleer) in dem leeren Behälter (1) bestimmt wird.

7.  Verfahren nach zumindest einem der Ansprüche 1 bis 6,
    umfassend den Schritt:

    - Justierung des Füllstandsmessgeräts (6), wobei der Messwert des Füllstandsmessgeräts (6) derart angepasst wird, dass das mit dem Füllstandsmessgerät (6) ermittelte Volumen (Vmed) des Mediums in dem Behälter (1) mit dem durch das Verfahren zur Bestimmung des restlichen Leervolumens (V_leer) ermittelten Volumens (Vmed) des Mediums in dem Behälter (1) übereinstimmt.

8.  Verfahren nach zumindest einem der Ansprüche 1 bis 7, wobei als Druckerhöhungsmedium (Mtest) Umgebungsluft oder ein hochreines Gas, insbesondere gereinigte Umgebungsluft oder $CO_2$ verwendet wird.

9.  Verfahren nach zumindest einem der Ansprüche 1 bis 8,
    wobei bei dem Einströmen des Druckerhöhungsmediums (Mtest) eine unter Druck stehende Gasflasche (10) oder ein Druckluftsystem (11) einer Prozessanlage, in welcher das Vor-Ort Verfahren zur Kalibrierung eines Füllstandsmessgeräts (6) durchgeführt wird, verwendet wird.

10. Verfahren nach zumindest einem der Ansprüche 1 bis 9,

    wobei die Vor-Ort Kalibrierung des Füllstandsmessgeräts (6) nach einer Reinigung des Behälters (1) mit einem Reinigungsmedium (RM) erfolgt, wobei das Reinigungsmedium (RM) als das bei der Vor-Ort Kalibrierung verwendete Medium dient,
    und wobei insbesondere nach der Vor-Ort Kalibrierung des Füllstandsmessgeräts (6) eine Dampfsterilisation des Behälters (1) erfolgt.

11. Vor-Ort Kalibriermodul für ein Füllstandsmessgerät, das zur Vor-Ort Kalibrierung des Füllstandsmessgeräts (6) nach mindestens einem der Ansprüche 1 bis 10 ausgestaltet ist, umfassend ein an dem Zulauf (2) angeordnetes Durchflussmessgerät (3), ein zum Messen des anfänglichen Drucks (p0) und des erhöhten zweiten Drucks (ph) ausgestaltetes Druckmessgerät (7), ein zum Messen der Temperatur in dem Behälter (1) ausgestaltetes Temperaturmessgerät (8), und eine Regel-/Auswerteeinheit (5).

12. Vor-Ort Kalibriermodul nach Anspruch 11,
    wobei das Druckmessgerät (7) und/oder das Temperaturmessgerät (8) an dem Zulauf (2) angeordnet sind.

13. Vor-Ort Kalibriermodul nach Anspruch 11 oder 12,
    wobei das Vor-Ort Kalibriermodul als ein mobiles Vor-Ort Kalibriermodul ausgestaltet ist, welches insbesondere mit einer zweiten, an dem Behälter (1) angeordneten Ventileinheit (9) verbindbar ist.

14. Vor-Ort Kalibriermodul nach Anspruch 11 oder 12,
    wobei das Vor-Ort Kalibriermodul an dem Behälter (1) angeordnet und mit dem Behälter (1) fest verbunden ist.

**Claims**

1.  A method for the on-site calibration of a fill-level measuring device (6) which is configured to determine and/or monitor a fill level (L) of a medium in a container (1), in particular of a process medium (PM) or cleaning medium (RM),

    wherein it is, in particular, a contactlessly operating fill-level measuring device (6), comprising at least the following steps:

    - determining the volume (Vmed) of the medium in the container (1) by a method for determining the remaining empty volume (V_leer) in a container (1) that is provided for receiving a process medium (PM) and can be closed in a pressuretight manner, in which container (1) a medium, in particular a cleaning medium (RM) or the process medium (PM) is located such that the remaining empty volume (V_leer) for the container (1) filled with medium is determined, wherein the remaining empty volume (V_leer) is a remaining volume of the container (1) that can be occupied by a medium, in particular the process medium (PM) or a cleaning medium (RM), the method for determining the remaining empty volume (V_leer) comprising the following steps:

 o measuring a first pressure (p0) initially present in the container (1);
 o flowing a gaseous pressure boosting medium (Mtest) through an inlet (2) into the container (1), wherein the pressure boosting medium (Mtest) flowing into the container (1) occupies the remaining empty volume (V_leer) and the first pressure (p0) initially present is increased to an increased second pressure (ph);
 ∘ measuring the increased second pressure (ph);
 ∘ determining the pressure increase $\Delta p = ph - p0$ caused by the inflow of the pressure boosting medium (Mtest);
 ∘ determining a volume (V_Mtest) of the pressure boosting medium (Mtest) flowing into the container (1);
 ∘ measuring a temperature (T) present in the container (1); and
 ∘ determining the remaining empty volume (V_leer) on the basis of the pressure increase $\Delta p$, the volume (V_Mtest) of the pressure boosting medium (Mtest), and the temperature (T),

wherein the volume (Vmed) of the medium in the container (1) is determined on the basis of a difference between a total empty volume (V_gesleer) in the empty container (1) that can be occupied by a medium and the remaining empty volume (V_leer) for the container (1) filled with medium:

$$Vmed = V\_gesleer - V\_leer$$

 - measuring the fill level (L) of the medium in the container (1) with the fill-level measuring device (6);
 - determining a volume of the medium (Vmed) in the container (1) with the fill-level measuring device (6) using an, in particular initially determined, stored relation (Vmed(h)) between the fill level (L) measured with the fill-level measuring device (6) and a volume (Vmed) of the medium in the container (1) dependent on the fill level (L);
 - establishing, documenting, and/or displaying at least the difference between the volume (Vmed) of the medium in the container (1) determined by the fill-level measuring device (6) and the volume (Vmed) of the medium in the container (1) determined by the method for determining the remaining empty volume (V_leer).

**2.** The method as claimed in claim 1,

wherein the remaining empty volume (V_leer) is determined as follows from the pressure increase $\Delta p$, the volume (V_Mtest) of the pressure boosting medium (Mtest), and the temperature (T), and from a specifiable reference temperature (Tn) and a specifiable reference pressure (pn):

$$V\_leer = V\_Mtest \cdot \frac{T + Tn}{Tn} \cdot \frac{pn}{\Delta p + pn}$$

wherein Tn is the specifiable reference temperature and pn is the specifiable reference pressure.

**3.** The method as claimed in claim 1 or 2,
comprising the following steps:

 - continuously measuring a volumetric flow rate of the pressure boosting medium (Mtest) during the inflow of the pressure boosting medium (Mtest) through the inlet (2) into the container (1) by means of a flowmeter (3) attached to the inlet (2), in particular by means of a Coriolis flowmeter; and
 - determining the volume (V_Mtest) of the pressure boosting medium (Mtest) flowing into the container (1) by means of the measured volume flow rate during the inflow.

**4.** The method as claimed in at least one of the preceding claims,
comprising the following steps:

 - specifying a specifiable target pressure (phsoll) and/or a specifiable target pressure increase ($\Delta$psoll);

- transmitting the measured first pressure (p0) initially present to a control/evaluation unit (5) configured to control a valve unit (4);
- substantially continuously measuring during the inflow the increased second pressure (ph) present here and transmitting the measured increased second pressure (ph) to the control/evaluation unit (5); and
- controlling the valve unit (4) through the control/evaluation unit (5) such that the pressure boosting medium (Mtest) flows into the container (1) until the increased second pressure (ph) reaches the specified target pressure (phsoll) and/or until the pressure increase ($\Delta p$) reaches the specified target pressure increase ($\Delta psoll$).

5. The method as claimed in at least one of the preceding claims 1 to 3, comprising the following steps:

- specifying a specifiable target volume (V_Mtestsoll) of the pressure boosting medium (Mtest);
- substantially continuously transmitting the volume (V_Mtest) of the inflowing pressure boosting medium (Mtest) measured by the flowmeter (3) to the control/evaluation unit (5) during inflow; and
- controlling a valve unit (4) through the control/evaluation unit (5) such that the pressure boosting medium (Mtest) flows into the container (1) until the measured volume (V_Mtest) reaches the specifiable target volume (V_Mtestsoll).

6. The method as claimed in at least one of the preceding claims,

wherein the total empty volume (V_gesleer) is determined by means of a method for determining the remaining empty volume (V_leer) with the empty container (1), the method for determining the remaining empty volume (V_leer) comprising the following steps:

- measuring a first pressure (p0) initially present in the container (1);
- flowing a gaseous pressure boosting medium (Mtest) through an inlet (2) into the container (1), wherein the pressure boosting medium (Mtest) flowing into the container (1) occupies the remaining empty volume (V_leer) and the first pressure (p0) initially present is increased to an increased second pressure (ph);
- measuring the increased second pressure (ph);
- determining the pressure increase $\Delta p = ph - p0$ caused by the inflow of the pressure boosting medium (Mtest);
- determining a volume (V_Mtest) of the pressure boosting medium (Mtest) flowing into the container (1);
- measuring a temperature (T) present in the container (1); and
- determining the remaining empty volume (V_leer) on the basis of the pressure increase $\Delta p$, the volume (V_Mtest) of the pressure boosting medium (Mtest), and the temperature (T),

and wherein the remaining empty volume (V_leer) of the empty container (1) determined here is determined as the total empty volume (V_gesleer) in the empty container (1) that can be occupied by a medium, in particular by the process medium (PM) or by a cleaning medium (RM).

7. The method as claimed in at least one of claims 1 to 6, comprising the following step:

- adjusting the fill-level measuring device (6), wherein the measured value of the fill-level measuring device (6) is adapted such that the volume (Vmed) of the medium in the container (1) determined using the fill-level measuring device (6) matches the volume (Vmed) of the medium in the container (1) determined by the method for determining the remaining empty volume (V_leer).

8. The method as claimed in at least one of claims 1 to 7, wherein ambient air or a high-purity gas, in particular purified ambient air or $CO_2$, is used as the pressure boosting medium (Mtest).

9. The method as claimed in at least one of claims 1 to 8, wherein, during the inflow of the pressure boosting medium (Mtest), use is made of a pressurized gas cylinder (10) or a compressed air system (11) of a processing system in which the on-site method for calibrating a fill-level measuring device (6) is carried out.

10. The method as claimed in at least one of claims 1 to 9,

wherein the on-site calibration of the fill-level measuring device (6) takes place after a cleaning of the container (1) with a cleaning medium (RM), wherein the cleaning medium (RM) serves as the medium used in the on-site calibration,
and wherein the container (1) is steam-sterilized in particular after the on-site calibration of the fill-level measuring device (6).

11. An on-site calibration module for a fill-level measuring device which is configured for the on-site calibration of the fill-level measuring device (6) as claimed in at least one of claims 1 to 10,
comprising a flowmeter (3) arranged at the inlet (2), a pressure gauge (7) configured to measure the initial pressure (p0) and the increased second pressure (ph), a temperature gauge (8) configured to measure the temperature in the container (1), and a control/evaluation unit (5).

12. The on-site calibration module as claimed in claim 11,
wherein the pressure gauge (7) and/or the temperature gauge (8) are arranged at the inlet (2).

13. The on-site calibration module as claimed in claim 11 or 12,
wherein the on-site calibration module is configured as a mobile on-site calibration module which can be connected, in particular, to a second valve unit (9) arranged on the container (1).

14. The on-site calibration module as claimed in claim 11 or 12,
wherein the on-site calibration module is arranged on the container (1) and fixedly connected to the container (1).

**Revendications**

1. Procédé destiné à l'étalonnage sur site d'un transmetteur de niveau (6), lequel est conçu pour déterminer et/ou surveiller un niveau (L) d'un produit dans un réservoir (1), notamment d'un produit de process (PM) ou d'un produit de nettoyage (RM),

pour lequel il s'agit notamment d'un transmetteur de niveau (6) fonctionnant sans contact, lequel procédé comprend les étapes consistant à :

- Déterminer le volume (Vmed) du produit dans le réservoir (1) par l'intermédiaire d'un procédé de détermination du volume vide restant (V_leer) dans un réservoir (1), lequel réservoir est prévu pour recevoir un produit de process (PM) et pouvant être fermé de manière étanche à la pression, réservoir (1) dans lequel se trouve un produit, notamment un produit de nettoyage (RM) ou le produit de process (PM), de sorte que le volume vide restant (V_leer) est déterminé pour le réservoir (1) rempli de produit, le volume vide restant (V_leer) étant un volume restant du réservoir (1) pouvant être occupé par un produit, notamment le produit de process (PM) ou un produit de nettoyage (RM), le procédé destiné à la détermination du volume vide restant (V_leer) comprenant les étapes suivantes consistant à :

◦ Mesurer une première pression (p0) initialement présente dans le réservoir (1) ;
◦ Faire affluer un produit gazeux d'augmentation de pression (Mtest) dans le réservoir (1) par une arrivée (2), le produit d'augmentation de pression (Mtest) affluant dans le réservoir (1) occupant le volume vide restant (V_leer) et la première pression (p0) présente initialement étant augmentée jusqu'à une deuxième pression augmentée (ph) ;
◦ Mesurer la deuxième pression augmentée (ph) ;
◦ Déterminer l'augmentation de pression Δp = ph - p0 provoquée par l'afflux du produit d'augmentation de pression (Mtest) ;
◦ Déterminer un volume (V_Mtest) du produit d'augmentation de pression (Mtest) qui a afflué dans le réservoir (1) ;
◦ Mesurer une température (T) présente dans le récipient (1) ;
◦ Déterminer le volume vide restant (V _leer) à partir de l'augmentation de pression ΔP, du volume (V_Mest) du produit d'augmentation de pression (Mtest) et de la température (T),

le volume (Vmed) du produit dans le réservoir (1) étant déterminé à partir d'une différence entre un volume vide total (V_leer) pouvant être occupé par un produit dans le réservoir (1) vide et le volume vide restant (V_leer) pour le réservoir (1) rempli de produit :

$$Vmed = V\_gesleer - V\_leer$$

- Mesurer le niveau (L) de produit dans le réservoir (1) avec le transmetteur de niveau
- Déterminer un volume de produit (Vmed) dans le réservoir (1) avec le transmetteur de niveau (6) à l'aide d'une relation mémorisée (Vmed(h)) - laquelle est déterminée notamment initialement - entre le niveau (L) mesuré avec le transmetteur de niveau (6) et un volume (Vmed) du produit dans le réservoir dépendant du niveau (L)
- Constater, documenter et/ou afficher au moins la différence entre le volume (Vmed) du produit dans le réservoir (1) - lequel est déterminé par le transmetteur de niveau (6) - et le volume (Vmed) de produit dans le réservoir (1) - lequel est déterminé par le procédé destiné à la détermination du volume vide restant (V_leer).

2.  Procédé selon la revendication 1,

    pour lequel le volume vide restant (V_leer) est déterminé comme suit à partir de l'augmentation de pression ΔP, du volume (V_Mtest) du produit d'augmentation de pression (Mtest), de la température (T), ainsi que d'une température de référence (Tn) et d'une pression de référence (pn) prédéfinissable :

    $$V\_leer = V\_Mtest \cdot \frac{T + Tn}{Tn} \cdot \frac{pn}{\Delta p + pn}$$

    où Tn est la température de référence prédéfinissable et pn la pression de référence prédéfinissable.

3.  Procédé selon la revendication 1 ou 2,
    lequel procédé comprend les étapes consistant à :

    - Mesurer en continu un débit volumique du produit d'augmentation de pression (Mtest) pendant l'afflux de produit d'augmentation de pression (Mtest) dans le réservoir (1) par l'arrivée (2) au moyen d'un débitmètre (3) monté sur l'arrivée (2), notamment au moyen d'un débitmètre Coriolis ;
    - Déterminer le volume (V_Mtest) du produit d'augmentation de pression (Mtest) affluant dans le réservoir (1) au moyen du débit volumique mesuré lors de l'afflux.

4.  Procédé selon au moins l'une des revendications précédentes,
    lequel procédé comprend les étapes consistant à :

    - Spécifier une pression de consigne (phsoll) prédéfinissable et/ou une augmentation de pression de consigne (Δpsoll) prédéfinissable ;
    - Transmettre la première pression (p0) mesurée, présente initialement, à une unité de régulation/d'exploitation (5) conçue pour commander une unité de vanne (4) ;
    - Mesurer pour l'essentiel en continu, pendant l'afflux de la deuxième pression augmentée (ph) alors présente et transmettre la deuxième pression augmentée (ph) mesurée à l'unité de régulation/d'exploitation (5) ;
    - Commander l'unité de vanne (4) par l'unité de régulation/d'exploitation (5) de telle sorte que le produit d'augmentation de pression (Mtest) afflue dans le réservoir (1) jusqu'à ce que la deuxième pression augmentée (ph) atteigne la pression de consigne (phsoll) prédéfinie et/ou jusqu'à ce que l'augmentation de pression (ΔP) atteigne l'augmentation de pression de consigne (Δpsoll) prédéfinie.

5.  Procédé selon au moins l'une des revendications précédentes 1 à 3,
    lequel procédé comprend les étapes consistant à :

    - Spécifier un volume de consigne (V_Mtestsoll) prédéfinissable du produit d'augmentation de pression (Mtest) ;
    - Transmettre pour l'essentiel en continu le volume (V_Mtest) du produit d'augmentation de pression (Mtest) affluant - lequel produit est mesuré par le débitmètre (3) - à l'unité de régulation/d'exploitation (5) pendant l'afflux ;
    - Commander une unité de vanne (4) par l'unité de régulation/d'exploitation (5) de telle sorte que le produit d'augmentation de pression (Mtest) afflue dans le réservoir (1) jusqu'à ce que le volume (V_Mtest) mesuré atteigne le volume de consigne (V_Mtestsoll) prédéfinissable.

**6.** Procédé selon au moins l'une des revendications précédentes,

pour lequel le volume vide total (V_gesleer) est déterminé au moyen d'un procédé destiné à la détermination du volume vide restant (V_leer) avec le réservoir vide (1),
le procédé destiné à la détermination du volume vide restant (V_leer) comprenant les étapes consistant à :

- Mesurer une première pression (p0) initialement présente dans le réservoir (1) ;
- Introduire un produit gazeux d'augmentation de pression (Mtest) dans le réservoir (1) par une arrivée (2), le produit d'augmentation de pression (Mtest) introduit dans le réservoir (1) occupant le volume vide restant (V_leer) et la première pression (p0) présente initialement étant augmentée jusqu'à une deuxième pression augmentée (ph) ;
- Mesurer la deuxième pression augmentée (ph) ;
- Déterminer l'augmentation de pression $\Delta p = ph - p0$ provoquée par l'afflux du produit d'augmentation de pression (Mtest) ;
- Déterminer un volume (V_Mtest) du produit d'augmentation de pression (Mtest) qui a afflué dans le réservoir (1) ;
- Mesurer une température (T) présente dans le réservoir (1) ;
- Déterminer le volume vide restant (V_leer) à l'aide de l'augmentation de pression $\Delta p$, du volume (V_Mest) du produit d'augmentation de pression (Mtest) et de la température (T),

et le volume vide restant (V_leer) du réservoir vide (1) ainsi déterminé étant déterminé comme le volume vide total (V_gesleer) pouvant être occupé par un produit, notamment par le produit de process (PM) ou par un produit de nettoyage (RM), dans le réservoir vide (1).

**7.** Procédé selon au moins l'une des revendications 1 à 6,
lequel procédé comprend l'étape consistant à :

- Ajuster le transmetteur de niveau (6), la valeur mesurée du transmetteur de niveau (6) étant ajustée de telle sorte que le volume (Vmed) du produit dans le réservoir (1) déterminé par le transmetteur de niveau (6) coïncide avec le volume (Vmed) du produit dans le réservoir (1) déterminé par le procédé destiné à la détermination du volume vide restant (V_leer).

**8.** Procédé selon au moins l'une des revendications 1 à 7,
pour lequel on utilise comme produit d'augmentation de pression (Mtest) de l'air ambiant ou un gaz de grande pureté, notamment de l'air ambiant purifié ou du C02.

**9.** Procédé selon au moins l'une des revendications 1 à 8,
pour lequel, lors de l'afflux du produit d'augmentation de pression (Mtest), on utilise une bouteille de gaz (10) sous pression ou un système d'air comprimé (11) d'une installation de process dans laquelle le procédé sur site est mis en oeuvre pour l'étalonnage d'un transmetteur de niveau (6).

**10.** Procédé selon au moins l'une des revendications 1 à 9,

pour lequel l'étalonnage sur site du transmetteur de niveau (6) est effectué après un nettoyage du réservoir (1) avec un produit de nettoyage (RM), le produit de nettoyage (RM) servant de produit utilisé lors de l'étalonnage sur site,
et pour lequel, notamment après l'étalonnage sur site du transmetteur de niveau (6), une stérilisation à la vapeur du réservoir (1) est effectuée.

**11.** Module d'étalonnage sur site destiné à un transmetteur de niveau (6), lequel module est conçu pour l'étalonnage sur site du transmetteur de niveau (6) selon au moins l'une des revendications 1 à 10, lequel module comprend un débitmètre (3) disposé sur l'arrivée (2), un manomètre (7) conçu pour mesurer la pression initiale (p0) et la deuxième pression augmentée (ph), un transmetteur de température (8) conçu pour mesurer la température dans le réservoir (1), ainsi qu'une unité de régulation/d'exploitation (5).

**12.** Module d'étalonnage sur site selon la revendication 11,
pour lequel le transmetteur de pression (7) et/ou le transmetteur de température (8) sont disposés à l'arrivée (2).

**13.** Module d'étalonnage sur site selon la revendication 11 ou 12,
pour lequel le module d'étalonnage est conçu comme un module d'étalonnage sur site mobile, lequel module peut être relié notamment à une deuxième unité de vanne (9) disposée sur le réservoir (1).

**14.** Module d'étalonnage sur site selon la revendication 11 ou 12,
pour lequel le module d'étalonnage sur site est disposé sur le réservoir (1) et relié de manière fixe au réservoir (1).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2016061646 A1

- US 6038919 A